# EUROPEAN PATENT SPECIFICATION

(11) **EP 3 206 476 B1**
(45) Date of publication and mention of the grant of the patent: **15.06.2022**
(21) Application number: 15850714.5
(22) Date of filing: 16.10.2015
(51) Int. Cl.: A01G 9/24, A01G 31/04

(54) **HORTICULTURAL METHOD AND APPARATUS**
VERFAHREN UND VORRICHTUNG FÜR GARTENBAU
APPAREIL ET PROCÉDÉ HORTICOLE

(30) Priority: 16.10.2014 CA 2867551
(43) Date of publication of application: 23.08.2017
(73) Proprietor: 9934294 Canada Inc, Quebec J0L 2K0 (CA)
(72) Inventor: Dumont, Gilles, St-Philippe de Laprairie, Quebec J0L 2K0 (CA)
(74) Representative: Glück Kritzenberger Patentanwälte PartGmbB
(86) International application number: PCT/CA2015/000538
(87) International publication number: WO 2016/058084

(56) References cited:
- WO-A2-01/93660
- WO-A2-01/93660
- CA-A1- 2 421 389
- CA-A1- 2 431 523
- CA-A1- 2 460 465
- US-A- 4 255 897
- US-A- 5 862 628
- US-A1- 2014 090 295
- US-B2- 7 401 437

## Description

### FIELD OF THE INVENTION

The present invention relates to a plant growing apparatus and more particularly, relates to a plant growing apparatus using a rotating cylindrical drum.

### BACKGROUND OF THE INVENTION

The use of lamps for growing various types of plants is well known in the art. Hydroponics are used to grow a wide variety of plants. Generally, a non soil medium is utilized and the plant is provided the nutrients by means of a liquid. The plant roots are exposed to the liquid such that the plant may gather and utilize the nutrients.

A basic hydroponic system utilizes a flat surface with a light extending above. The plants grow in containers which usually lie in a horizontal plane. One problem with this type of arrangement is the amount of energy required for the lights which must be provided for each small groups of plants. This becomes relatively expensive with respect to electrical costs.

More recently, it has been proposed in the art to utilize a rotating drum which will carry the non soil medium in which the plant grows. The drum rotates about a light source normally placed interiorly of the drum so as to minimize electricity costs. In most systems, the drum is rotated and as it does so, it passes over a trough located at the bottom of the drum. The root system of the plant is immersed to provide the required moisture and nutrients. One disadvantage of such a system is that the plants continue to drip and ways for collecting the waste water must be provided. At the same time, this waste water contains nutrients which are wasted and can be a contaminant as far as local waters are concerned.

In such a rotating drum system, the maintenance of the correct light intensity is very important. The light intensity is exponentially related to the distance between the plant and the light.

US 5 862 628 discloses a horticultural apparatus according to the preamble of claim 1.

The use of such plant growing systems as set forth above has become even more important with current water crises. At the present time, plants grown in a "natural" environment require sufficient moisture. Since this is not always delivered by nature through rain, watering systems must be provided. Again, however, the use of the water is not optimized and much is lost.

### SUMMARY OF THE INVENTION

It is the object of the present invention to provide a horticultural apparatus for optimizing the growth of a plant.

According to an aspect not covered by the present invention, a method for optimizing the growth of a plant comprises the steps of taking a measurement of at least one property of a plant growing in a growing medium, calculating the optimal nutritional requirement of the plant based on the measurement, and injecting an optimum amount of at least one substance selected from the group consisting of water, fertilizer, and a combination of water and fertilizer, into the container.

According to the present invention, there is provided a horticultural apparatus comprising a rotating drum having at least one ring; a drive system to rotatably drive said ring; a light source within said drum; a plurality of medium retaining members extending transversely of said ring; a feed arrangement comprising a housing having a manifold line and a feed line; said feed arrangement including a feed for water, a fertilizer feed, and a manifold, wherein said feed for water and said fertilizer feed are meeting at the manifold, and wherein said feed for water and said fertilizer feed each having a filter, a valve and a flow meter. Each of said medium retaining members comprises a plurality of cells, each of said cells adapted to receive a plant; said feed arrangement comprising a plurality of injectors, each injector being associated with an individual cell of said plurality of cells; each of said cells having a moisture sensor associated therewith; said feed arrangement including a sensor trigger adapted to contact each moisture sensor to receive information as to the status of each of the cells, said feed arrangement including a computer card adapted to control said feed for water and said fertilizer feed.

The apparatus of the present invention is used to optimize the growth of a plant. This is achieved by taking a measurement of at least one property of a plant growing in a growing medium and subsequently calculating the optimal nutritional requirement of the plant. This will be followed by injecting or otherwise providing an optimal amount of at least one substance selected from the group consisting of water, fertilizer and a combination of water and fertilizer into the container having the plant therein.

The plant may be grown in any suitable growing medium. Such mediums are well known in the art and widely utilized and need not be discussed herein.

The method may take a measurement of at least one property of either the plant itself or the growing medium. This measurement may be taken directly or, in some instances, done remotely.

The property measured is the moisture in the growing medium. Based on this measurement, a desired amount of water and/or nutrient may be injected or otherwise provided to the plant as is known in the art. In one embodiment, the foliage of the plant could be analyzed. This can be done remotely through the use of cameras or any other suitable instrument. A measurement of the foliage of the plant such as the colour can provide valuable information. Using various algorithms, one could calculate the requirements of the plant and use it to provide the desired dosage of water/nutrients. Carbon dioxide could be supplied to the plants as may be required.

In practising the method not covered by the present invention, there is preferably provided a horticultural apparatus of the rotating drum type. Such apparati are known in the art as exemplified by United States Patent 7,401,437.

The horticultural apparatus will include a rotating drum which preferably rotates about a light source. The light source may be selected from among those well known in the art. Additionally, light emitting diodes (LED's) may be utilized.

In one embodiment of the present invention, different colour LED's may be employed. Thus, depending upon the particular growth stage of the plant, a different colour LED may be employed. For example, during germination, a first colour may be employed while during the development of the foliage, a different colour may be utilized.

### BRIEF DESCRIPTION OF THE DRAWINGS

Having thus generally described the invention, reference will be made to the accompanying drawings illustrating embodiments thereof, in which:
Figure 1 is a perspective view of an embodiment of a horticultural apparatus according to the present invention;

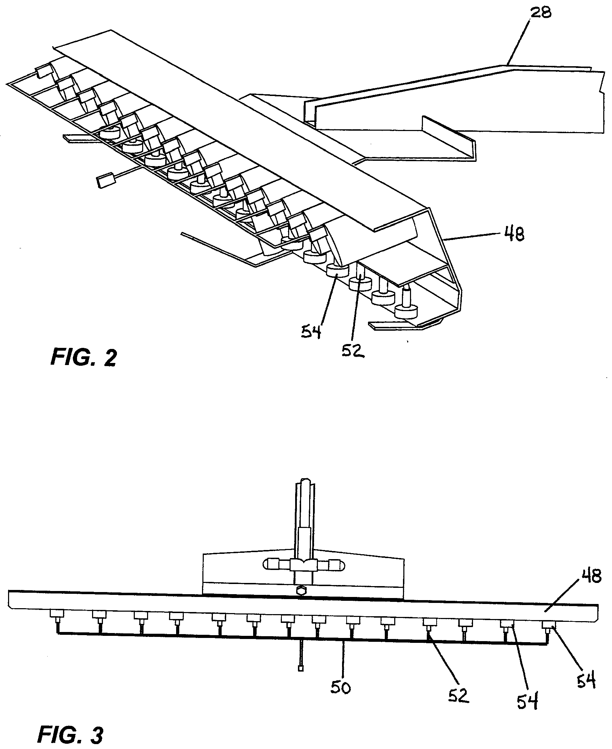

Figure 2 is a perspective detailed view of the injector apparatus used in the horticultural apparatus of Figure 1;
Figure 3 is a top plan view thereof;

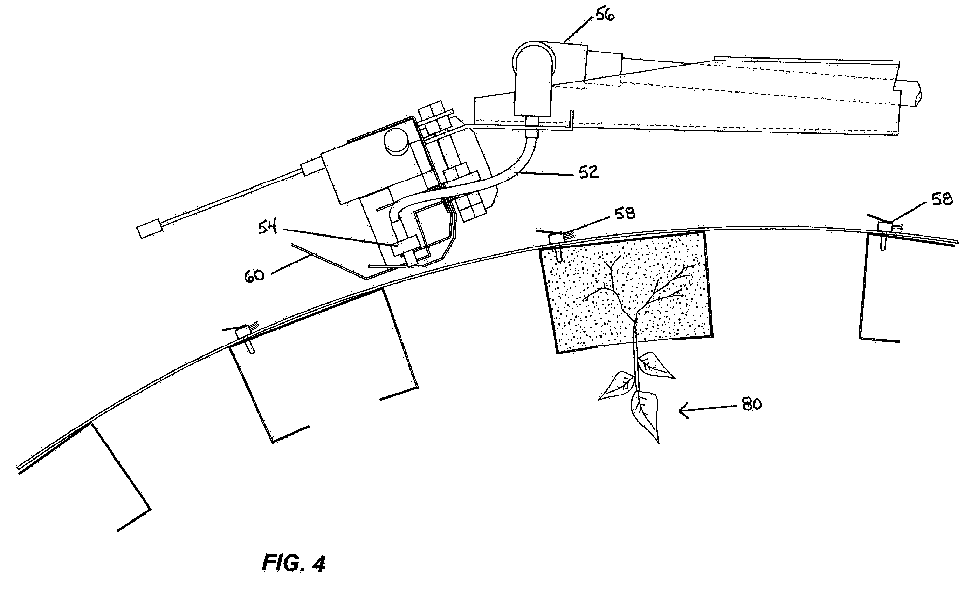

Figure 4 is a side view of a portion of the feeding device;

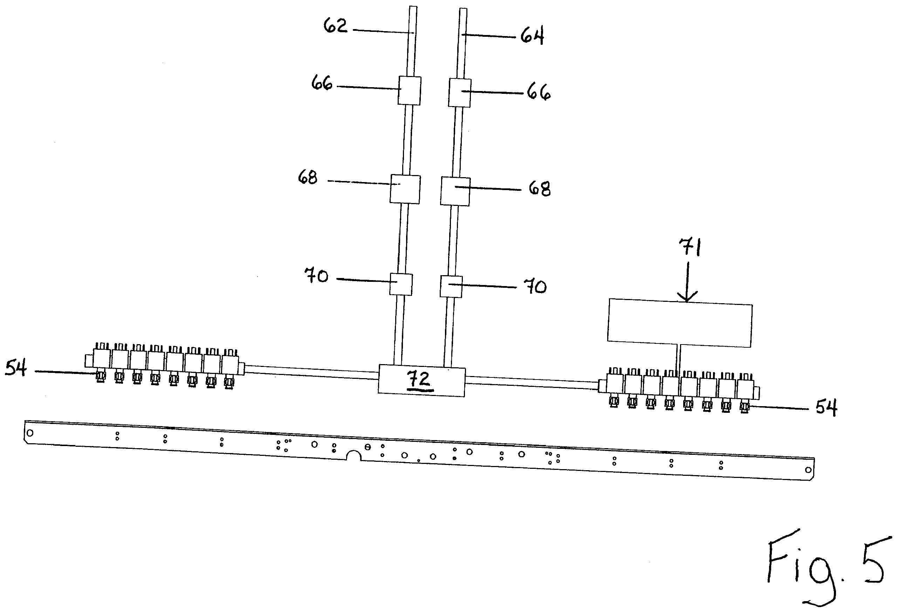

Figure 5 is an exploded view of a transversely extending member, medium retaining device and blocking member;

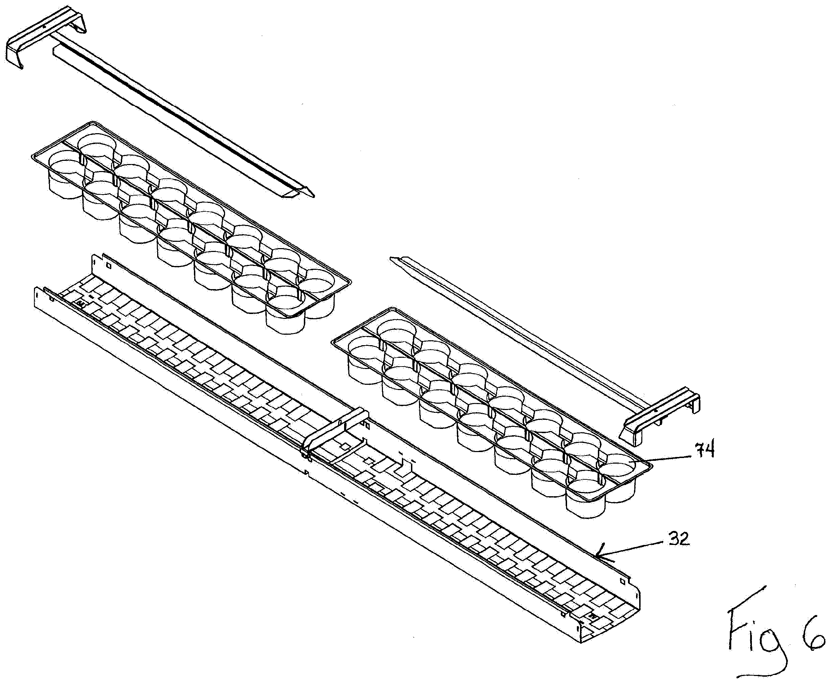

Figure 6 illustrates the individual lines and injectors;

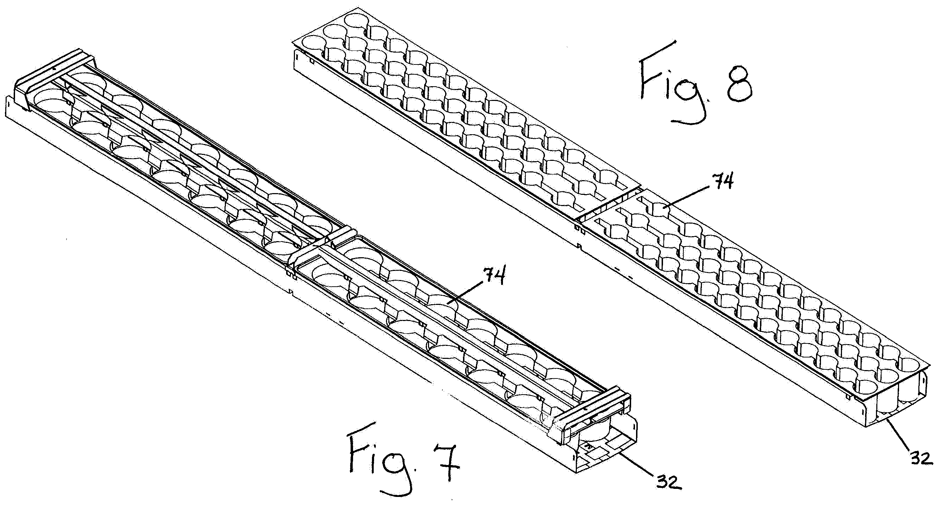

Figure 7 is a perspective view of the medium retaining member;
Figure 8 is a perspective view of a further medium retaining member and transversely extending member; and
Figure 9 is a perspective view of a further embodiment of a horticultural apparatus according to the present invention.

### DETAILED DESCRIPTION OF THE INVENTION

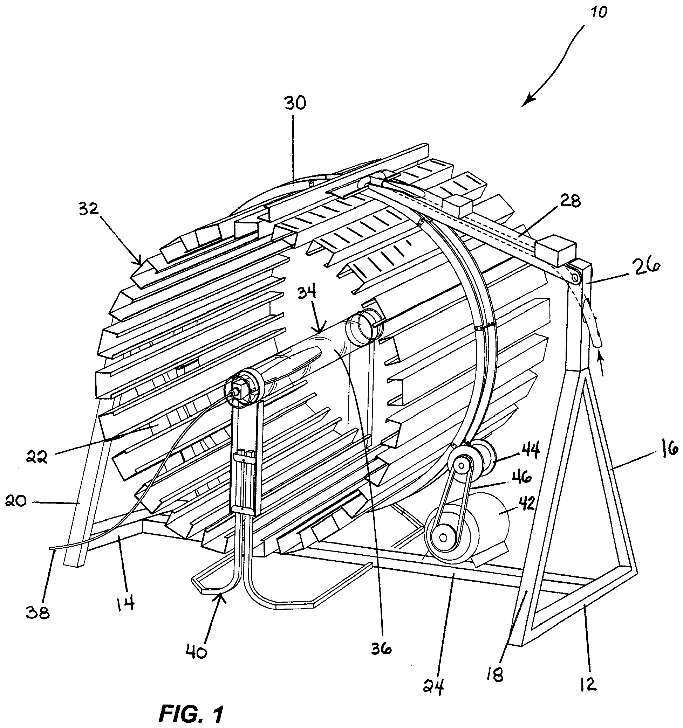

Referring to the drawings in greater detail and by reference characters thereto, there is illustrated in Figure 1 a horticultural apparatus which is generally designated by reference numeral 10.

Horticultural apparatus 10 includes a plurality of frame members including a first lower horizontal frame member 12 secured together with a pair of upwardly extending frame members 16, 18 and which have a vertical frame member 26 forming a part thereof. On the other side, there is also provided a lower horizontal frame member 14 secured together with upwardly extending frame members 20, 22. A longitudinally extending frame member 24 secures the two side frames. Extending inwardly over the feed apparatus is an upper feed arm 28.

Horticultural apparatus 10 includes a ring 30 to which are secured a plurality of transversely extending members 32. Located internally of ring 30 is a light housing 34 having a light 36 mounted therein. Power supply 38 supplies light 36. The light assembly is supported by a light support device 40.

Horticultural apparatus 10 includes a motor 42 and a drive member 44 which is operatively connected with ring 30 to rotatably drive the same. A drive belt 46 extends between drive member 44 and motor 42 in a conventional arrangement.

Horticultural apparatus 10 is supplied with, as previously mentioned, a plurality of transversely extending members 32 each of which is adapted to retain a plurality of growing medium devices. Each plant 80 is grown in its own particular cell 74 and is individually fed and watered. To this end, the feed arrangement comprises a housing 48 having a manifold line 50 and a feed line 52. A plurality of injectors 54 are provided, each for an individual cell. A main feed 56 is provided.

Each cell has a moisture sensor 58 associated therewith. The feeding device includes a sensor trigger 60 which is adapted to contact each moisture sensor 58 to receive information as to the status of the cell. A sensor trigger 60 works in conjunction with moisture sensor 58.

The arrangement will include a feed for water 62 and a fertilizer feed 64 which meet at a manifold 72. Each line will have filter 66, valve 68 and flow meters 70 associated therewith. A computer card 71 provides control thereover.

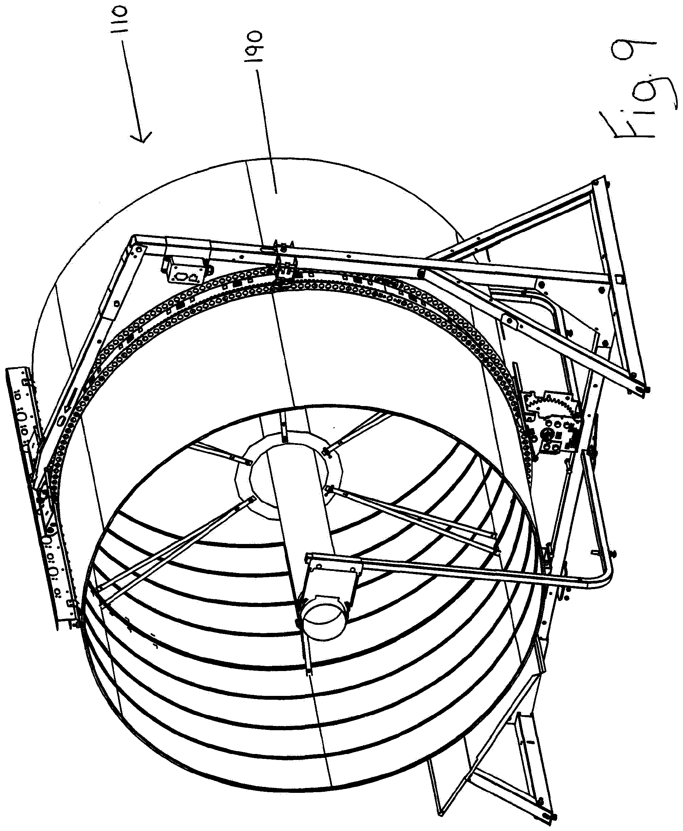

In the embodiment of Figure 9, the horticultural apparatus is generally designated by reference numeral 110. It is similar to the previously described embodiment except that a plurality of solid pieces 190 will form the drum. Pieces 190 are preferably formed of an organic material such as coconut matting which in and by itself may function as a growth medium or alternatively, may have inter spaced areas which permit the germination and growing of a plant. This arrangement would provide for easy harvesting of young greens as a knife could sweep the surface and cut the plants in situ.

## Claims

1. A horticultural apparatus (10) comprising:
a rotating drum having at least one ring (30);
a drive system to rotatably drive said ring (30);
a light source (36) within said drum;
a plurality of medium retaining members (32) extending transversely of said ring (30);
a feed arrangement comprising a housing (48) having a manifold line (50) and a feed line (52);
said feed arrangement including a feed for water (62), a fertilizer feed (64), and a manifold (72), wherein said feed for water (62) and said fertilizer feed (64) are meeting at the manifold (72), and wherein said feed for water (62) and said fertilizer feed (64) each having a filter (66), a valve (68) and a flow meter (70),
each of said medium retaining members (32) comprises a plurality of cells (74), each of said cells (74) adapted to receive a plant; **characterized in that**
said feed arrangement comprising a plurality of injectors (54), each injector (54) being associated with an individual cell (74) of said plurality of cells;
each of said cells (74) having a moisture sensor (58) associated therewith;
said feed arrangement including a sensor trigger (60) adapted to contact each moisture sensor (58) to receive information as to the status of each of the cells (74),
said feed arrangement including a computer card (71) adapted to control said feed for water (62) and said fertilizer feed (64).

2. The horticultural apparatus (10) of claim 1, wherein said light source (36) within said drum includes light emitting diodes.

## Patentansprüche

1. Gartenbauvorrichtung (10) aufweisend:
eine rotierende Trommel, die mindestens einen Ring (30) aufweist,
ein Antriebssystem, um den Ring (30) rotierend anzutreiben,
eine Lichtquelle (36) innerhalb der Trommel,
eine Vielzahl von Medienrückhalteelementen (32), die sich quer zu dem Ring (30) erstrecken,
eine Zufuhranordnung aufweisend ein Gehäuse (48) mit einer Verteilerleitung (50) und einer Zufuhrleitung (52),
wobei die Zufuhranordnung eine Zufuhr für Wasser (62), eine Düngemittelzufuhr (64) und einen Verteiler (72) umfasst, wobei die Zufuhr für Wasser (62) und die Düngemittelzufuhr (64) an dem Verteiler (72) zusammentreffen und wobei die Zufuhr für Wasser (62) und die Düngemittelzufuhr (64) jeweils einen Filter (66), ein Ventil (68) und einen Durchflussmesser (70) aufweisen,
wobei jedes der Medienrückhalteelemente (32) eine Vielzahl von Zellen (74) umfasst, wobei jede der Zellen (74) angepasst ist, um eine Pflanze aufzunehmen, **dadurch gekennzeichnet, dass**
die Zufuhranordnung eine Vielzahl von Einspritzvorrichtungen (54) umfasst, wobei jede Einspritzvorrichtung (54) einer einzelnen Zelle (74) der Vielzahl von Zellen zugeordnet ist,
wobei jede der Zellen (74) einen ihr zugeordneten Feuchtigkeitssensor (58) aufweist,
wobei die Zufuhranordnung einen Sensorauslöser (60) umfasst, der angepasst ist, um jeden Feuchtigkeitssensor (58) zu kontaktieren, um Informationen in Bezug auf den Zustand jeder der Zellen (74) zu empfangen,
wobei die Zufuhranordnung eine Computerkarte (71) umfasst, die angepasst ist, um die Zufuhr für Wasser (62) und die Düngemittelzufuhr (64) zu steuern.

2. Gartenbauvorrichtung (10) nach Anspruch 1, wobei die Lichtquelle (36) innerhalb der Trommel Licht emittierende Dioden umfasst.

## Revendications

1. Appareil d'horticulture (10) comprenant :
un tambour rotatif comportant au moins un anneau (30) ;
un système d'entraînement destiné à entraîner ledit anneau (30) en rotation ;
une source de lumière (36) à l'intérieur dudit tambour ;
une pluralité d'éléments de retenue moyens (32) s'étendant transversalement audit anneau (30) ;
un ensemble d'alimentation comprenant un boîtier (48) présentant une conduite de distribution (50) et une conduite d'alimentation (52) ;
ledit ensemble d'alimentation incluant une alimentation en eau (62), une alimentation en engrais (64), et un distributeur (72), dans lequel ladite alimentation en eau (62) et ladite alimentation en engrais (64) se rejoignent au niveau du distributeur (72), et dans lequel ladite alimentation en eau (62) et ladite alimentation en engrais (64) comportent respectivement un filtre (66), une vanne (68) et un débitmètre (70),
chacun desdits éléments de retenue moyens (32) comprend une pluralité de cellules (74), chacune desdites cellules (74) étant adaptée pour recevoir une plante ;
**caractérisé en ce que**
ledit ensemble d'alimentation comprend une pluralité d'injecteurs (54), chaque injecteur (54) étant associé à une cellule (74) individuelle parmi ladite pluralité de cellules ;
chacune desdites cellules (74) comportant un capteur d'humidité (58) associé à celle-ci ;
ledit ensemble d'alimentation incluant un déclencheur de capteur (60) adapté pour être en contact avec chaque capteur d'humidité (58) pour recevoir des informations concernant l'état de chacune des cellules (74),
ledit ensemble d'alimentation incluant une carte informatique (71) adaptée pour commander ladite alimentation en eau (62) et ladite alimentation en engrais (64).

2. Appareil d'horticulture (10) selon la revendication 1, dans lequel ladite source de lumière (36) à l'intérieur dudit tambour inclut des diodes électroluminescentes.
